(19) Europäisches Patentamt
European Patent Office
Office européen des brevets

(11) Publication number: 0 135 992 A2

(12) **EUROPEAN PATENT APPLICATION**

(21) Application number: 84304680.6

(22) Date of filing: 09.07.84

(51) Int. Cl.⁴: **B 27 N 3/00**, B 29 C 33/64 // B29K103/00

(30) Priority: 13.07.83 US 513527

(43) Date of publication of application: 03.04.85 Bulletin 85/14

(84) Designated Contracting States: BE DE FR GB IT NL SE

(71) Applicant: ATLANTIC RICHFIELD COMPANY, 515 South Flower Street, Los Angeles California 90071 (US)

(72) Inventor: Nguyen, Tinh, 13006 Country Ridge Drive, Germantown Maryland 20874 (US)
Inventor: Gaul, James M., 224 Autumn Drive, Exton, PA 19341 (US)

(74) Representative: Cropp, John Anthony David et al, MATHYS & SQUIRE 10 Fleet Street, London, EC4Y 1AY (GB)

(54) **Preparation of lignocellulosic composite articles using a functional polysiloxane release agent.**

(57) An improvement is provided in the compression molding of lignocellulosic composite articles, such as particle or flake board, in which polyisocyanate binder systems are employed, the improvement being the provision of a functional polysiloxane release agent on the mold surfaces to give multiple release. Optionally organopolysiloxane fluid may be employed along with the functional polysiloxane as a diluent.

EP 0 135 992 A2

# PREPARATION OF LIGNOCELLULOSIC COMPOSITE ARTICLES USING A FUNCTIONAL POLYSILOXANE RELEASE AGENT

## BACKGROUND OF THE INVENTION

The present invention relates to the compression molding of lignocellulosic materials into composite bodies, sheets and the like and more particularly to a method for preparation of particle board with a polyisocyanate binder and the use of a functional polysiloxane as a release agent capable of providing multiple release from the forming mold surfaces.

The molding of lignocellulosic and lignocellulosic-containing fibers, particles or layers to form composite articles is known. Organic di-and polyisocyanates as useful binders for lignocellulose materials have been known for some time and give to particle board products increased stability and mechanical strength; see, for example, U.S. Patent Nos. 3,428,592; 3,440,189; 3,557,263; 3,636,199; 3,870,665; 3,919,017 and 3,930,110. It is also known in the art that the isocyanate binders are mixed with the wood particles utilized as the base for the particle board. A wood chip or particle and isocyanate binder mixture is then formed into a mat and molded with pressure and temperature to the desired size or shape. Water emulsion polyisocyanate binder systems for use with lignocellulosic particles are also known. A principal disadvantage of the use of isocyanates in the preparation of particle board is due to their excellent adhesive properties. Thus, isocyanate systems, either the water emulsion or the straight polyisocyanate

binders, stick tenaciously to the metal caul plates which are employed to support the wood particles during transporting and the pressing or molding processes. Such poor release of the molded particle board from the caul or mold surface creates difficulty in the cleaning and automatic handling of the cauls. In order to prevent the sticking problem, external release agents have been developed and applied to the caul plates or platens or mat surface as described for example in U. S. Patent No. 4,110,397. Other conventional release agents such as oils, waxes, polishes, silicones and polytetrafluoroethylene have been unsatisfactory as have the specialized urethane release agents including those used in structural foam applications. Another method of overcoming the sticking problem has been to overlay the isocyanate-bound lignocellulosic particles with a veneer of wood as shown, for example, in U.S. Patent Nos. 3,390,110; 4,197,219 and 3,919,017, or to use a release paper. These methods have the disadvantage of either adding more cost to the product or of not fully utilizing the superiority of the isocyanate binder. Many of the release agents developed to date have to be applied during every composite production cycle in large quantities to be effective.

## SUMMARY OF THE INVENTION

The present invention provides for the preparation of lignocellulosic composite articles or sheets which comprises shaping in a mold or between [illegible] faces a mixture of lignocellulosic particles

and a polyisocyanate based binding agent, there being provided on the mold surface or surfaces a functional polysiloxane release agent which may also be admixed with an organopolysiloxane fluid as a diluent.

It is an object of the present invention to provide novel compositions which serve as release agents and provide for multiple release of the molded articles.

Another object is to provide release agents which are readily applied and adhere to the mold surfaces.

A further object is to provide release agents which need only be applied in small amounts.

These and other objects and advantages of this invention will become apparent from the description of the invention and from the claims.

DETAILED DESCRIPTION OF THE INVENTION

The present invention comprises a method for the preparation of lignocellulosic composite molded articles, particularly particle board, by bonding together wood chips or other lignocellulosic or organic material using heat and pressure with an organic polyisocyanate employed as the binding agent and with the application of a film by dipping, spraying or wiping of a functional polysiloxane to the mold surface or surfaces; said functional polysiloxane having the formula

$$(CH_3)_3Si(OSiCH_2)_n(SiOCH_2)_m\underset{\substack{|\\ x}}{Si}OCH_3$$

wherein n is an integer of from 5 to 30, m is an integer of from 1 to 20 and x is a group selected from $-CH_2OH$, $-\underset{\substack{|\\ CH_3}}{C}HOH$, $-COOH$, $-COH$ or $-OH$.

For essentially permanent release or longer production use cycles the mold surface or surfaces with film applied may be heated to between 75°C. and 200°C. for from 1 to 5 minutes before use.

The molded lignocellulosic composite such as, for example, particle board or flake board is generally prepared by spraying the particles with the polyisocyanate binder as they are being mixed or agitated in suitable and conventional equipment such as a blender. Suitably, the polyisocyanate binder use levels, based on the weight of oven dried (0% moisture content) lignocellulosic material is from about 1.5 to 12 and preferably 2.5 to 6.5 weight percent. Other materials such as fire retardants may also be added to the particles or sprayed with the binder during the blending or mixing step.

After forming a uniform mixture the coated lignocellulosic particles are formed into a loose mat or felt in the desired proportions onto a caul plate of polished aluminum or steel which serves to carry the "cake" into the heated press to consolidate the wood particles into a board of desired thickness. Temperatures of the press are generally between about 140° and 220°C. and pressures of from about 100 to 600 psi. Pressing times are from about 1 to 10 preferably 3 to 5 minutes. Pressing times, temperatures and pressures vary widely depending on the thickness of the board produced, the desired density of the board, the size of the lignocelluloxic particles used, and other factors well known in the art.

The polyisocyanate binding agent will generally be

an organic polyisocyanate used alone but may also be in admixture with another type of binding agent, e.g. a synthetic resin glue. The polyisocyanate may be applied in liquid form, as a solution in an inert solvent or in the form of an aqueous emulsion.

The polyisocyanate component which is used in the present invention in the binder system can be any organic polyisocyanate and include aliphatic, alicyclic and aromatic polyisocyanates that contain at least two isocyanate groups per molecule. Such polyisocyanates include the diisocyanates and higher functionality isocyanates. Mixtures of polyisocyanates may be used which for example are the mixtures of di- and higher functional polyisocyanates produced by phosgenation of aniline-formaldehyde condensate or as described in U.S. Patent Nos. 3,962,302 and 3,919,279. The organic polyisocyanates may be isocyanate-ended prepolymers made by reacting under standard known conditions, an excess of a polyisocyanate with a polyol which on a polyisocyanate to polyol basis may range from about 20:1 to 2:1 and include for example polyethylene glycol, polypropylene glycol, triethylene glycol, etc. as well as glycols or polyglycols partially esterified with carboxylic acids including polyester polyols and polyether polyols. Illustrative of organic polyisocyanates which may be employed include for example, toluene-2,4- and 2,6-diisocyanates or mixtures thereof, diphenylmethane diisocyanate, m- and p-phenylene diisocyanates or mixtures thereof, m- and p-diphenylene diisocyanates, polymethylene polyphenyl isocyanates, naphthalene-1,

5-diisocyanate, chlorophenylene diisocyanate, $\alpha,\alpha$-xylene diisocyanate, triphenylmethane triisocyanate, hexamethylene diisocyanate, 3,3'-ditolylene-4,4-diisocyanate, butylene 1,4-diisocyanate, octylene-1,8-diisocyanate, 1,4- 1,3- and 1,2-cyclohexylene diisocyanate and in general the polyisocyanates disclosed in U.S. Patent No. 3,577,358, 3,012,008 and 3,097,191. The preferred polyisocyanates are the diphenylmethane diisocyanate 2,4' and 4,4' isomers including the 2,2' isomer and the higher functional polyisocyanate and polymethylene polyphenyl isocyanate mixtures which may contain from about 20 to 85 weight percent of the diphenylmethane diisocyanate isomers. Typical of the preferred polyisocyanates are those sold commercially as "Rubinate-M" (Rubicon Chemicals, Inc.). In general the organic polyisocyanates will have a molecular weight in the range between about 100 and 10,000. The aqueous organic polyisocyanate or isocyanate-terminated prepolymer emulsions are generally prepared by using any of the techniques known in the art for the preparation of aqueous emulsions or dispersions prior to use of the compositon as binder. In general the polyisocyanate is dispersed in water in the presence of an emulsifying or surface active agent which may be any of the emulsifying agents also known in the art including anionic and nonionic agents. Preparation of the aqueous emulsions may be carried out as described in U.S. Patent Nos. 3,996,154; 4,143,014 and 4,257,995.

The lignocellulosic materials employed to prepare the molded compositions using polyisocyanate binders include wood chips, wood fibers, shavings,

sawdust, wood wool, cork bark and the like products from the woodworking industry. Fibers, particles, etc. from other natural products which are lignocellulosic such as straw, flax residues, dried weeds and grasses, nut shells, hulls from cereal crops such as rice and oats and the like may be used. In addition, the lignocellulosic materials may be mixed with inorganic flakes or fibrous material such as glass fibers or wool, mica and asbestos as well as with rubber and plastic materials in particulate form. The lignocellulose may contain a moisture (water) content of up to 25 percent by weight but preferably contains between 4 and 12 percent by weight moisture.

As indicated herein above organo polysiloxane fluids may be employed along with the functional polysiloxane release agents as a diluent and are used in amounts of from 0 to 25 weight percent, preferably from 10 to 20 weight percent based on the total mixture of functional polysiloxane and organopolysiloxane. The organopolysiloxane fluids suitable for use in this invention are generally alkyl-terminated polysiloxane fluids having from 1 to 18 carbon atoms bonded to the silicon atom. Examples of suitable organopolysiloxane fluids are those having alkyl radicals such as methyl, ethyl, propyl, butyl, hexyl, octyl, decyl, dedecyl, tetradecyl, hexadecyl, octadecyl and the like; aryl radicals such as phenyl and naphthyl and mixtures thereof. Generally, it is preferred that the organopolysiloxane be free of terminal-hydroxyl groups; however, a small number of terminal-hydroxyl groups will not materially affect the mold release composition. The organopolysiloxane may

have a minor proportion of molecules with only one hydroxyl group or there may be a small number of molecules present carrying in excess of two hydroxyl groups. However, as mentioned previously, it is preferred that the organopolysiloxane be substantially free of hydroxyl groups. In general, the polysiloxane fluids should have a molecular weight of between about 3,000 and 90,000 which is equivalent to a viscosity of between about 50 and 100,000 centipoises, preferably from about 100 to 5,000 centipoises. Optimum results have been obtained in the lower portion of these ranges such as from about 200 to 500 centipoises. In addition, it is possible to combine high and low viscosity fluids to form a fluid having the desired viscosity range.

The organopolysiloxane fluids used in accordance with this invention may be represented by the formula

$$R-\overset{R'}{\underset{R''}{\overset{|}{\underset{|}{Si}}}}-\left[O-\overset{R'}{\underset{R''}{\overset{|}{\underset{|}{Si}}}}-\right]_y O-\overset{R'}{\underset{R''}{\overset{|}{\underset{|}{Si}}}}-R$$

wherein R,R' and R" which may be the same or different represent organic groups having from 1 to 18 carbon atoms, preferably alkyl groups having from 1 to 4 carbon atoms, and y has a value of from 80 to about 150,000.

The novel mold release agents of the instant invention, whether the functional polysiloxane alone or the functional polysiloxane admixed with an organopolysiloxane fluid, may be employed in a liquid organic solvent which would preferably be sufficiently volatile to vaporize during the application process. Preferred solvents include toluene, xylene, benzene, naphtha type

solvents, higher $C_4$ to $C_{10}$ alcohols such as isobutanol and hydrocarbon solvents such as perchloroethylene.

The functional polysiloxane release agent may be applied to the mold surfaces as a concentrated or dilute solution or as a dispersion. It is preferred that the release agent composition be dissolved in a volatile organic solvent such as a mixture of toluene and isobutanol and then sprayed, wiped or brushed onto the mold surfaces in the form of a thin film. This may best be obtained by rubbing the mold surface or surfaces with a swab saturated with a solution of the release composition. However, when practical, the mold surfaces may be sprayed with the composition to form a thin film thereon.

Once the release composition has been applied to the mold surfaces, it may be used immediately. However, it is preferred that the coating be dried especially when an organic solvent has been used. More preferably, as indicated hereinbefore the coated mold surfaces are heated to between about 75° to 200°C. for from 1 to 5 minutes to fill all pores and openings and to provide for an essentially permanent release or longer production use cycles.

The following examples are provided to illustrate the invention in accordance with the principles of this invention, including examples of a comparative nature, but are not to be construed as limiting the invention in any way except as indicated by the appended claims.

EXAMPLE 1

580 grams of pine wood chips dried to a moisture content of 6 percent were placed in an open tumbler-mixer. During tumbling 16 grams of a diphenylmethane diisocyanate-polymethylene polyphenylisocyanate (PMDI) mixture having a 46.5 percent diphenylmethane diisocyanate content as a binder were sprayed evenly onto the wood chips by an air pressurized system. Two new aluminum caul plates 12" x 12" x 3/16" were wiped with a cloth saturated with a mixture of 10 parts by weight of a silanol ($-CH_2OH$) terminated polydimethyl siloxane, having a molecular weight of 28,000, and 90 parts by weight of a 50:50 mixture of toluene and isobutanol. The polyisocyanate coated wood chips were then preformed in a box 10.5 inches square and 12 inches high which was supported by one of the release agent coated caul plates and prepressed to form a thick mat. The box was then taken out and the second coated caul plate placed on top of the mat. The whole assembly was subjected to a temperature of 190°C., pressed to stops at a thickness of 13mm and held for 4 minutes and the pressure released. The lignocellulosic (wood chip board) composite was easily released from the caul plates. The board making procedure as above was repeated two additional times using the same originally coated caul plates with easy release of the composite.

EXAMPLE 2

The procedure of Example 1 was repeated except that the aluminum caul plates wiped with the 23,000 mol wt. silanol terminated polydimethyl siloxane-toluene-isobutanol release agent were heated at 176°C. for 3 minutes prior to use. Five repeated cycles of board preparation and release at 190°C. were recorded.

EXAMPLES 3 to 9

The procedure of Example 2 was repeated employing various functional polysiloxanes plus a polysiloxane fluid and solvent as indicated below.

| EXAMPLE NO. | FUNCTIONAL POLYSILOXANE | RELEASE CYCLES AT 190°C. |
|---|---|---|
| 3 | Silanol ($-CH_2OH$) Terminated Polydimethyl Siloxane (22,000 mol wt.) | 4 |
| 4 | Silanol ($-CH_2OH$) Terminated Polydimethyl Siloxane (40,000 mol wt.) | 6 |
| 5 | Silanol ($-CH_2OH$) Terminated Polydimethyl Siloxane (3,200 mol wt.) | 3 |
| 6 | 80:20 Mixture of Silanol Terminated Siloxane of Ex 4 and Polydimethyl Siloxane Fluid | 6 |
| 7 | 80:20 Mixtures of Siloxane of Ex 3 and Polydimethyl siloxane fluid diluted to 10% in a 50:50 mixture of toluene and isobutanol | 5 |
| 8 | Carbinol (-COH) Terminated polydimethyl siloxane (2,400 mol wt.) | 4 |
| 9 | Carboxy (-COOH) Terminated polydimethyl siloxane diluted to 10% in a 50:50 mixture of toluene and isobutanol | 6 |

EXAMPLE 10

The procedure of Example 1 was repeated using a silanol ($-CH_2OH$) terminated polydimethyl siloxane (mol wt. of 40,000) in the form of a 10% water emulsion. The 10% emulsion was made using 10% of a solution containing 2 parts toluene, 20 parts of an octyl phenoxy

polyethoxylated ethanol of the formula

$C_8$ — 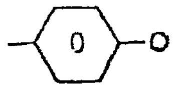 —$O(CH_2CH_2O)_xH$; x = 5 ("Triton X-45" sold commercially by Rohm & Haas) and 80 parts of an octyl phenoxy polyethoxylated ethanol of the above formula wherein x = 9 - 10 ("Triton X-100" Rohm & Haas). Repeated use of the treated caul plates gave 7 release cycles when hot (190°C.).

EXAMPLE 11

The procedure of Example 9 was repeated using a 10% water emulsion of the carboxy terminated polydimethyl siloxane instead of the toluene-isobutanol solvent dilution. The emulsion was prepared, based on the carboxy terminated polydimethyl siloxane, using 10% octyl phenoxy polyethoxylated ethanol ("Triton X-100" of Example 10) as emulsifier. Repeated use of the release agent treated caul plates gave 9 release cycles when hot (190°C.).

EXAMPLE 12

The procedure of Example 11 was repeated using a 50% water emulsified polyisocyanate binder prepared by mixing together 100 parts by weight of a diphenylmethane diisocyanate-polymethylene polyphenyl isocyanate (PMDI) mixture having a 46.5 percent diphenylmethane diisocyanate content, 30 parts by weight of a liquid polyoxypropylene derivative of trimethylolpropane and 10 parts by weight methoxy polyethylene glycol ("Carbowax 750" of Union Carbide Corp.). The mixture was heated at 60°C. for 4 hours with stirring and then cooled to room temperature and the 50% water emulsion prepared. The 10% water emulsion of carboxy terminated polydimethyl siloxane

provided 9 release cycles of the caul plates.

EXAMPLE 13 CONTROL

Example 1 was repeated except that no release agent was applied to the caul plates. The pressed lignocellulosic composite could not be released even after cooling down.

EXAMPLE 14 CONTROL

Examples 1 and 2 were repeated except that the caul plates in three composite preparations were wiped with a 15% solution of zinc stearate, aluminum stearate and lithium stearate in isobutanol. Only one cycle of release was recorded with each when hot (190°C.)

CLAIMS

1. A process for the preparation of a lignocellulosic composite molded article wherein lignocellulosic particles are contacted with an organic polyisocyanate-based binder composition and the treated particles are subsequently formed into a molded article by the application of heat and pressure, characterised in that a film coating of a functional polysiloxane is provided on the mold surface or surfaces to facilitate release of the lignocellulosic molded article, said functional polysiloxane having the formula:

$$(CH_3)_3Si(OSiCH_2)_n(\underset{\displaystyle X}{\underset{|}{SiOCH_2}})_mSiOCH_3$$

wherein n is an integer of from 5 to 30, m is an integer of from 1 to 20 and X is a group selected from $-CH_2OH$, $-\underset{\displaystyle CH_3}{\underset{|}{CHOH}}$, $-COH$, $-COOH$ or $-OH$

and said functional polysiloxane being employed optionally together with up to 25% by weight of organopolysiloxane fluid, based on the mixture of functional polysiloxane and organopolysiloxane fluid, as a diluent.

2. A process according to claim 1 wherein the lignocellulosic composite article is particle board.

3. A process according to claim 2 wherein the particles are wood particles.

4. A process according to claim 1, claim 2 or claim 3 wherein the lignocellulosic composite is compressed between metal platens at a temperature of from about 40°C. to 220°C. and a pressure of from about 100 psi and 600 psi for a period of from 1 to 10 minutes.

5. A process according to claim 4 wherein the time is from 3 to 5 minutes.

6. A process according to any one of claims 1 to 5 wherein the coated mold surface or surfaces are heated at a temperature of from about 75°C. to 200°C. for a period of from about 1 to 5 minutes prior to preparation of lignocellulosic composite molded articles.

7. A process according to any one of claims 1 to 6 wherein the organic polyisocyanate is selected from diphenylmethane diisocyanate and polymethylene polyphenyl polyisocyanates containing from about 20 to 85 percent by weight diphenylmethane diisocyanate.

8. A process according to any one of claims 1 to 7 wherein the functional polysiloxane is applied in admixture with a solvent.

9. A process according to claim 8 wherein the solvent is toluene or isobutanol or a mixture thereof.

10. A process according to any one of claims 1 to 9 wherein the organopolysiloxane fluid is between 10 and 20 weight percent of the mixture of functional polysiloxane and organopolysiloxane fluid.